# EUROPÄISCHE PATENTSCHRIFT

(11) **EP 1 370 417 B1**
(45) Veröffentlichungstag und Bekanntmachung des Hinweises auf die Patenterteilung: **25.08.2004**
(21) Anmeldenummer: 02712725.7
(22) Anmeldetag: 19.01.2002
(51) Int. Cl.: B41F 13/24, B41F 31/30, F16D 63/00, F16C 13/02

(54) **FIXIEREINRICHTUNG**
FIXING DEVICE
DISPOSITIF DE FIXATION

(30) Priorität: 20.03.2001 DE 10113314
(43) Veröffentlichungstag der Anmeldung: 17.12.2003
(73) Patentinhaber: Koenig & Bauer Aktiengesellschaft, 97080 Würzburg (DE)
(72) Erfinder: FAIST, Bernd, Klaus, 97199 Ochsenfurt (DE); REDER, Wolfgang, Otto, 97209 Veitshöchheim (DE); SCHNEIDER, Georg, 97080 Würzburg (DE)
(86) Internationale Anmeldenummer: PCT/DE2002/000166
(87) Internationale Veröffentlichungsnummer: WO 2002/074541

(56) Entgegenhaltungen:
- DE-A- 3 046 989
- DE-A- 4 231 673
- DE-A- 19 719 305
- DE-A- 19 919 733

## Beschreibung

Die Erfindung betrifft eine Fixiereinrichtung gemäß dem Oberbegriff des Anspruches 1.

In herkömmlichen Druckmaschinen, wie beispielsweise Rollenrotationsdruckmaschinen, sind eine Vielzahl von Walzen vorhanden. Insbesondere sind Farbwalzen vorgesehen, die der Übertragung der Farbe aus einem Farbspeicher auf die Plattenzylinder dienen. Durch die Farbwalzen kann die auf die Plattenzylinder übertragene Farbe dosiert werden, sodass die Farbe als einheitlicher Film bestimmter Dicke übertragen wird. Störungen, wie zum Beispiel Geschwindigkeitsschwankungen und Drehschwingungen können dadurch ausgeglichen werden.

Außerdem können in der Druckmaschine auch Feuchtwerkswalzen vorgesehen sein, die ein Feuchtmittel, beispielsweise Wasser, auf das Druckwerk übertragen.

Häufig werden Walzenpaare von miteinander in Eingriff stehenden Walzen gebildet, bei denen zumindest eine der Walzen eine Zylinderfläche aus elastischem Material aufweist, sodass diese Zylinderfläche abhängig vom Anpressdruck der gegenüberliegenden Walze zumindest geringfügig verformt werden kann. Im Ergebnis ergibt sich durch die elastische Verformung der Walzenoberfläche ein sich gradlinig zwischen den Walzen erstreckender Kontaktbereich, der als Kontaktstreifen bezeichnet wird. Die Breite des Kontaktstreifens kann durch die Erstellung des Anpressdrucks zwischen den Walzen variiert werden, wobei die Breite des Kontraktstreifens einen erheblichen Einfluss auf das Druckergebnis hat. Ist beispielsweise in einem Farbwerk der Kontaktstreifen zu schmal, so wird nicht genug Farbe übertragen, wohingegen in den Fällen, in denen der Kontaktstreifen zu breit ist, die elastische Walze durch die dabei auftretende Walkarbeit beschädigt werden kann.

Um insbesondere die Streifenbreite jeweils abhängig von den Betriebsbedingungen, beispielsweise der Temperatur der Druckmaschinen beziehungsweise deren Verschleißgrad, immer richtig einstellen zu können, ist es erforderlich, die eine Walze verstellbar zu lagern, sodass sie mit einem Aktor mit einer einstellbaren Kraft in Richtung der gegenüberliegenden Walze gedrückt werden kann. Ist dann der richtige Anpressdruck zwischen den beiden Walzen gefunden, wird eine Fixiereinrichtung zum Fixieren der ersten Walze relativ zur zweiten Walze betätigt, um den Anpressdruck dauerhaft aufrecht zu erhalten.

Aus der DE 197 19 305 A 1 ist eine gattungsgemäße Vorrichtung zum Einstellen des Anpressdruckes zwischen zwei Walzen bekannt. Bei der dort beschriebenen Lageranordnung wird die verstellbar gelagerte Walze mit einer Feder, die sich am Gestell der Druckmaschine abstützt, gegen die gegenüberliegende Walze gedrückt. Dadurch stellt sich abhängig von der jeweils gewählten Federkennlinie immer ein bestimmter Anpressdruck zwischen den beiden Walzen aus. Zur Fixierung der Walze in der angepressten Stellung ist ein Klemmmechanismus mit Klemmhebel und Klemmplatte beschrieben, durch den die Walzenachse durch Reibschluss am Gestell der Druckmaschine fixierbar ist.

Aus der DE 199 19 733 A 1 ist eine Vorrichtung zum halbautomatischen Einstellen von Walzen bekannt, bei der die verstellbar gelagerte Walze in einem Walzenhalter gehalten wird, der seinerseits an einem gestellfest angeordneten Rahmenhalter gelagert ist. Walzenhalter und Rahmenhalter können dabei gegeneinander verschoben werden und sind durch federelastische Mittel miteinander verbunden. Die federelastischen Mittel weisen dabei eine bestimmte Vorspannung auf, sodass die am Walzenhalter verstellbar gelagerte Walze mit einem bestimmten Anpressdruck gegen die gegenüberliegende Walze gedrückt werden kann. Zur Arretierung des Walzenhalters am Rahmenhalter sind Arretierbolzen vorgesehen, durch deren Zustellung der Walzenhalter reibschlüssig am Rahmenhalter beklemmt werden kann.

Die DE 42 31 673 A1 beschreibt eine Vorrichtung zur Walzeneinstellung, bei der eine Walze zuerst in radialer Richtung mittels eines Druckraumes verschoben wird und anschließend fixiert wird.

Die DE 30 46 989 C3 offenbart eine Vorrichtung zum Druckan- und Druckabstellen eines Presseurs. Dabei wird die Rotationsbewegung einer Synchronspindel durch eine Lamellenbremse festgelegt.

Der Erfindung liegt die Aufgabe zugrunde, eine Fixiereinrichtung zu schaffen.

Die Aufgabe wird erfindungsgemäß durch die Merkmale des Anspruches 1 gelöst.

Die mit der Erfindung erzielbaren Vorteile bestehen insbesondere darin, dass eine derartige Fixiereinrichtung außerordentlich kompakt und damit platzsparend realisierbar ist. Dies wird dadurch erreicht, dass zur Fixierung der verstellbaren Bauteile relativ zueinander mehrere Lamellenelemente reibschlüssig beklemmt werden. Durch die Anordnung mehrerer, insbesondere einer Vielzahl, solcher Lamellenelemente hintereinander, wird die zur Fixierung erforderliche Reibkraft auf eine Vielzahl von Reibflächen zwischen den Lamellenelementen verteilt. Durch die Beklemmung der hintereinander angeordneten Lamellenelemente wirkt die Klemmkraft jeweils entgegengesetzt in allen Reibflächen.

Geeignete Lamellenelemente sind beispielsweise von Lamellenkupplungen bekannt, die zur reibschlüssigen Verbindung von drehbar gelagerten Achsen eingesetzt werden. Im Unterschied zu den bekannten Lamellenkupplungen sind bei der Fixiereinrichtung die Lamellen in zumindest einer Richtung gegeneinander verschiebbar und können abhängig vom Spiel zwischen den Bauteilen der Fixiereinrichtung innerhalb eines bestimmten Stellbereichs gegeneinander verschoben und anschließend fixiert werden. Die Stellbewegung findet also nicht wie bei einer Lamellenkupplung in der Art einer Schwenkoder Rotationsbewegung statt, sondern erfolgt in der Art einer Translationsbewegung in der Ebene, die durch die Ausrichtung der Reibflächen der Lamellenelemente definiert wird.

Als Klemmeinrichtung können grundsätzlich alle Elemente bzw. Konstruktionen eingesetzt werden, mit denen die Lamellen unter Aufbringung eines ausreichenden Anpressdruckes miteinander beklemmt werden können. Besonders vorteilhaft ist es, wenn die Klemmeinrichtung in der Art eines vorgespannten Federelements ausgebildet ist. In der fixierten Stellung der Fixiereinrichtung wird von dem vorgespannten Federelement eine so hohe Federkraft auf die Lamellenelemente ausgeübt, sodass diese zuverlässig reibschlüssig aneinander fixiert sind. Ein ungewolltes Lösen der Fixiereinrichtung, beispielsweise beim Ausfall der Energieversorgung, wie es bei sonstigen Klemmeinrichtung zu befürchten ist, ist dadurch ausgeschlossen. Um die Klemmeinrichtung zur Verstellung der Bauteile der Fixiereinrichtung lösen zu können, ist bei dieser Ausführungsform ein Stellelement an der Fixiereinrichtung vorzusehen, mit dem das Federelement soweit zusammengedrückt werden kann, dass die Lamellenelemente entspannt und dadurch gegeneinander verschoben werden können.

Zur Betätigung des Federelements können grundsätzlich beliebige Antriebseinrichtungen, beispielsweise elektrische, hydraulische oder pneumatisch wirkende Systeme eingesetzt werden. Besonders vorteilhaft ist es, wenn das Stellelement in der Art eines Stempels ausgebildet ist, der verschiebbar in einer Druckkammer angeordnet wird. Durch Beaufschlagung der Druckkammer mit einem Druckmedium, beispielsweise Druckluft oder Hydraulikflüssigkeit, kann der Stempel gegen die Federkraft des Federelements verschoben werden, sodass im Ergebnis die Lamellenelemente entspannt werden.

Ein Vorteil der Vorrichtung zum Einstellen des Anpressdruckes zwischen den Walzen liegt ebenfalls in der sehr kompakten Bauweise, die durch die vorgeschlagene Konstruktion ermöglicht wird. Wie aus dem Stand der Technik bekannt, wird die Walze an einem Walzenhalter befestigt, der seinerseits verschiebbar an einem Rahmenhalter gelagert ist. Der Rahmenhalter wiederum kann entweder gestellfest am Gestell der Druckmaschine befestigt sein, oder alternativ dazu an entsprechenden Stelleinrichtungen angeordnet werden, die beispielsweise dem An- beziehungsweise dem Abstellen der im Walzenhalter gelagerten Walze relativ zur gegenüberliegenden Walze dienen.

Am Walzenhalter bzw. am Rahmenhalter ist eine Ausnehmung vorgesehen, in die ein Abschnitt des Rahmenhalters bzw. des Walzenhalters eingreift. Die Abmessungen des Abschnitts bzw. der Ausnehmung sind dabei so gewählt, dass sich zwischen der Ausnehmung und dem Abschnitt ein Spalt bildet, durch den der Stellbereich zwischen Walzenhalter und Rahmenhalter definiert wird. Innerhalb dieses Spaltes kann der Walzenhalter relativ zum Rahmenhalter verschoben werden. Um die für die Stellbewegung erforderlichen Stellkräfte aufbringen zu können, bzw. um die erste Walze mit einem bestimmten Anpressdruck gegen die gegenüberliegende Walze drücken zu können, ist in dem Spalt zumindest ein Aktor angeordnet, der eine Zug- und/oder Druckkraft auf den Walzenhalter ausübt und sich dabei auf dem Rahmenhalter abstützt. Aufgrund der Anordnung des Aktors im Spalt zwischen Rahmenhalter und Walzenhalter lassen sich außerordentlich kompakte Bauformen realisieren. Dabei ist es selbstverständlich gleichgültig, ob die Ausnehmung am Rahmenhalter oder Walzenhalter vorgesehen ist, sodass grundsätzlich beide Bauformen alternativ denkbar sind.

Die Gestalt der Ausnehmung und des darin eingreifenden Abschnitts ist grundsätzlich beliebig und kann auf den jeweiligen Einsatzfall abgestimmt werden. So ist es denkbar, dass die Ausnehmung rechtwinklig ausgebildet ist und lediglich in einer Richtung ein Spiel gegenüber dem darin eingreifenden Abschnitt aufweist, sodass im Ergebnis der Walzenhalter nur in eine Stellrichtung verstellt werden kann. Wird dagegen eine Verstellung des Walzenhalters in verschiedene Richtungen gewünscht, beispielsweise weil die im Walzenhalter gelagerte Walze an mehrere Walzen angestellt werden muss, ist es besonders vorteilhaft, wenn Ausnehmung und Abschnitt jeweils rotationssymmetrisch ausgebildet sind, sodass sich dazwischen ein umlaufender Spalt bildet. Dadurch kann erreicht werden, dass der Walzenhalter in einer Stellebene in verschiedene Stellrichtungen relativ zum Rahmenhalter verstellt werden kann, wobei der Stellbereich der Stellbewegung durch die Breite des umlaufenden Spalts begrenzt wird.

Kann der Walzenhalter relativ zum Rahmenhalter in verschiedene Stellrichtungen, beispielsweise in einer gesamten Stellebene, verstellt werden, sind zur Aufbringung der dafür erforderlichen Stellbewegung mehrere Aktoren erforderlich. Nach einer bevorzugten Ausführungsform sind deshalb im Spalt zwischen Walzenhalter und Rahmenhalter zumindest drei Aktoren angeordnet, mit denen die erste Walze in jeweils unterschiedliche Richtungen gedrückt werden kann. Durch entsprechende Wahl der von den jeweiligen Aktoren aufgebrachte Kräfte kann durch kombinierte Ansteuerung der verschiedenen Aktoren eine resultierende Kraft in beliebiger Richtung auf den Walzenhalter und damit auf die im Walzenhalter gelagerte Walze aufgebracht werden. Vorzugsweise werden die Aktoren dabei sternförmig im Spalt zwischen Walzenhalter und Rahmenhalter verteilt angeordnet. Werden vier Aktoren einander jeweils gegenüberliegend im Spalt angeordnet, kann dadurch ein Verkanten der Aktoren zuverlässig ausgeschlossen werden, da durch Antrieb eines Aktors der jeweils gegenüberliegende Aktor zusammengedrückt wird.

In welcher Art die Aktoren ausgebildet sind, ist grundsätzlich beliebig. So sind selbstverständlich elektrisch oder auch piezoelektrisch wirkende Systeme denkbar. Besonders vorteilhaft ist es, wenn der Aktor in der Art eines Druckkörpers ausgebildet ist, der mit einem Druckmedium beaufschlagbar ist. Wird als Druckmedium ein Hydrauliköl benutzt, können dadurch sehr hohe Drücke mit entsprechend großen Stellkräften aufgebracht werden.

Nach einer bevorzugten Ausführungsform wird als Druckmedium ein vorgespanntes Gas, insbesondere Druckluft eingesetzt. Da Gase grundsätzlich kompressibel sind, ergibt sich durch die Benutzung eines vorgespannten Gases als Druckmedium eine elastische Abfederung, die zwischen Rahmenhalter und Walzenhalter wirkt. Durch diese Abfederung können mechanische Störungen, die beispielsweise durch Unwuchten oder Unrundhalten verursacht sein können, ausgeglichen werden. Außerdem steht bei den meisten Druckmaschinen Druckluft als Energieübertragungsmedium bereits zur Verfügung.

Die Vorrichtung zum Einstellen des Anpressdruckes zwischen der verstellbar gelagerten Walze und einer gegenüberliegenden Walze kann selbstverständlich auch dazu genutzt werden, die verstellbar gelagerte Walze an die andere Walze an- beziehungsweise abzustellen. Dazu muss allerdings der Stellbereich zwischen Rahmenhalter und Walzenhalter ausreichend groß gewählt werden, um die für das Abstellen erforderliche Stellbewegung ausführen zu können. Außerdem muss der Aktor zwischen Rahmenhalter und Walzenhalter zur Durchführung einer solchen Stellbewegung geeignet gewählt werden. Um das An- beziehungsweise Abstellen unabhängig von der Betätigung der Vorrichtung durchführen zu können, ist es vorteilhaft, wenn die Vorrichtung auf einer. zusätzlichen Abstellvorrichtung befestigt ist. Diese Abstellvorrichtung kann beispielsweise in der Art eines Schwenkarms ausgebildet sein, mit dem der Rahmenhalter relativ zum Gestell der Druckmaschinen zwischen einer Anstellposition und einer Abstellposition verschwenkt werden kann.

Durch Anordnung einer Fixiereinrichtung in einer Vorrichtung zum Einstellen des Anpressdrucks zwischen zwei Walzen kann die Kompaktheit der Vorrichtung insgesamt weiter erhöht werden.

Dazu ist es besonders vorteilhaft, wenn sich die Fixiereinrichtung koaxial zur Längsachse der am Walzenhalter gelagerten Walze entlang der Mittelachse der Vorrichtung erstreckt.

Ausführungsbeispiele der Erfindung sind in den Zeichnungen dargestellt und werden im folgenden näher beschrieben.

Es zeigen:
- Fig. 1: eine schematisch dargestellte Fixiereinrichtung im Querschnitt;
- Fig. 2: eine schematisch dargestellte Vorrichtung zum Einstellen des Anpressdrucks zwischen zwei Walzen mit Fixiereinrichtung im Längsschnitt;
- Fig. 3: die schematisch im Querschnitt dargestellte Vorrichtung gemäß Fig. 2 in einer Grundstellung;
- Fig. 4: die schematisch im Querschnitt dargestellte Vorrichtung gemäß Fig. 2 in einer ausgelenkten Stellung;
- Fig. 5: die Vorrichtung gemäß Fig. 2 in einer perspektivischen Ansicht von vorne;
- Fig. 6: eine zweite Ausführungsform eines Aktors für die Vorrichtung im Querschnitt.

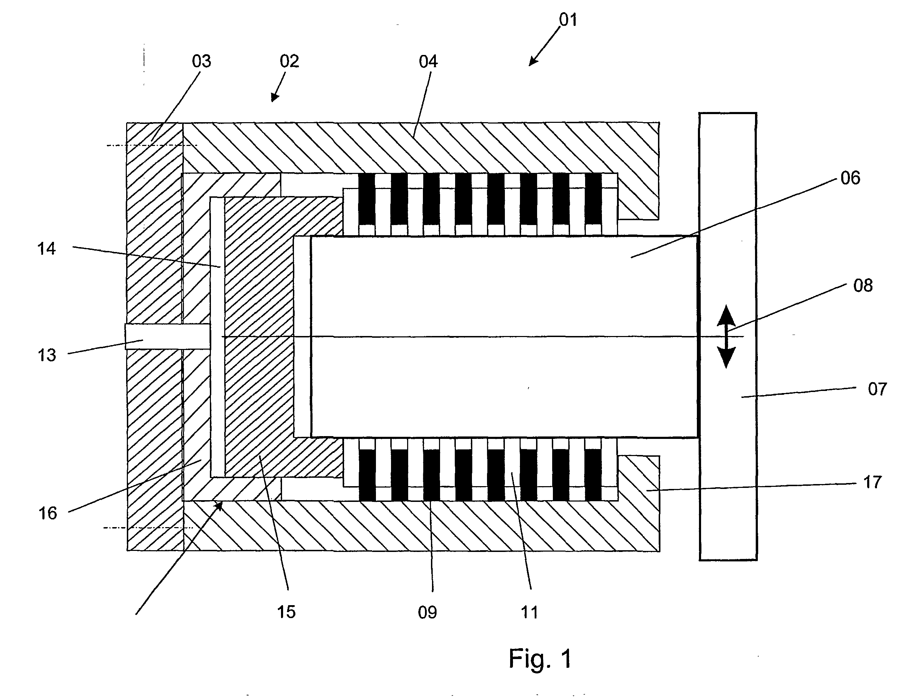

Die in Fig. 1 dargestellte Fixiereinrichtung 01 weist ein Teil, z. B. einen Grundkörper 02, der aus einem Deckel 03 und einer Hülse 04 gebildet wird, und einen in der Hülse 04 verschiebbar gelagertes Teil, z. B. einen Bolzen 06, an dessen Außenseite eine Befestigungsplatte 07 vorgesehen ist, auf. Der Grundkörper 02 kann beispielsweise an einem Gestell befestigt werden, wohingegen an der Befestigungsplatte 07 beispielsweise ein Walzenschloss zur Lagerung einer Walze angeschraubt werden kann.

Der Bolzen 06 weist radial zur Hülse 04 ein bestimmtes Spiel auf, sodass der Bolzen 06 relativ zum Grundkörper 02 in einer Stellebene, die sich senkrecht zur Zeichenebene erstreckt, in beliebige Stellrichtungen 08 verschoben werden kann. Dadurch kann die Befestigungsplatte 07 beispielsweise in Richtung des Bewegungspfeils 08 nach oben beziehungsweise unten verschoben werden. Aufgrund der kreissymmetrischen Ausbildung der Fixiereinrichtung 01 können aber auch Stellbewegungen in beliebige andere Richtungen innerhalb der Stellebene realisiert werden. Am Grundkörper 02 sind in äquidistanten Abständen Lamellenelemente 09 auf der Innenseite der Hülse 04 befestigt, die mit am Bolzen 06 befestigten Lamellenelementen 11 kämmen. Die Kontaktflächen zwischen den Lamellenelementen 09; 11 erstrecken sich dabei in Ebenen, die parallel zur Stellebene der möglichen Stellbewegungen verläuft. Während der Verstellung des Bolzens 06 relativ zum Grundkörper 02 gleiten die Lamellenelemente 09 entlang der Lamellenelemente 11, wobei die Stellbewegung durch das Spiel zwischen Bolzen 06 und Grundkörper 02 begrenzt wird.

Zur Fixierung der Fixiereinrichtung 01 in einer bestimmten Lage ist eine Klemmeinrichtung 12 mit einem Druckstempel 15, der in einem Druckzylinder 16 verschiebbar gelagert ist, vorgesehen. Durch den Anschluss 13 kann eine Druckkammer 14 mit einem Druckmedium, beispielsweise einem Hydrauliköl oder Druckluft, beaufschlagt werden, sodass der Druckstempel 15 im Druckzylinder 16 in Richtung der Lamellenelemente 09 beziehungsweise 11 gedrückt wird. Im Ergebnis werden dadurch die Lamellenelemente 09; 11 zwischen der Klemmeinrichtung 12 und einem an die Hülse 04 angeformten Endanschlag 17 beklemmt. Sobald die Flächenpressung zwischen dem Druckstempel 15 und dem vordersten Lamellenelement 11 einen bestimmten Druck übersteigt, kommen die einzelnen Lamellenelemente 09; 11 unter Ausbildung eines Haftreibungszustandes reibschlüssig aneinander zur Anlage, sodass der Bolzen 06 relativ zum Grundkörper 02 fixiert ist.

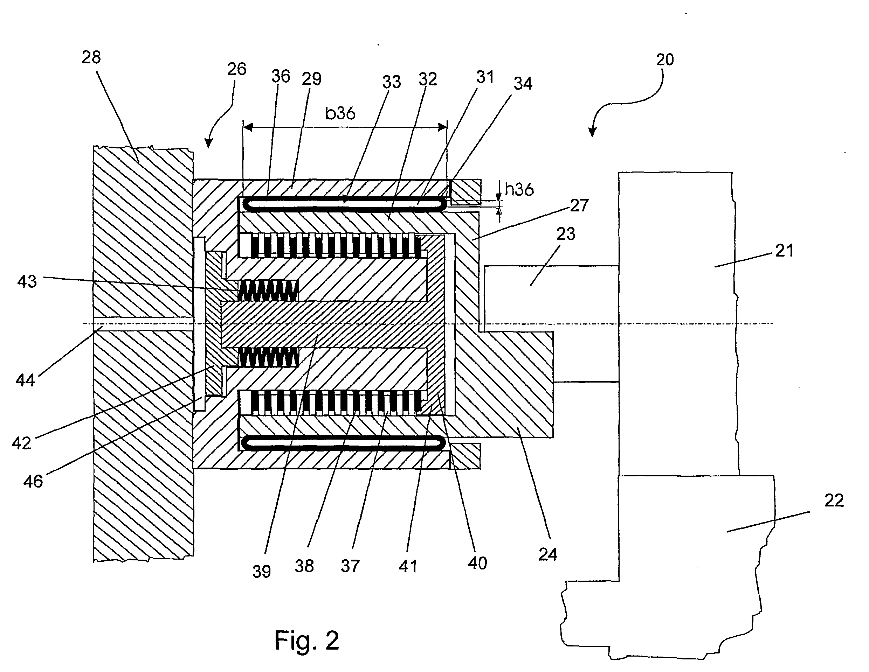

In Fig. 2 ist eine Vorrichtung 20 zum Einstellen des Anpressdruckes zwischen einer ersten Walze 21 und einer zweiten Walze 22 dargestellt. Die Walze 21 kann mit den Enden ihrer Achse 23 lösbar an einem an der Vorrichtung 20 vorgesehenen Schnellverschluss 24 befestigt werden. Derartige Schnellverschlüsse 24 sind aus dem Stand der Technik bekannt und weisen eine halbkreisförmige Lagerschale auf, in die die Enden der Walzenachse 23 eingelegt werden können. Durch Befestigung einer in Fig. 2 nicht dargestellten oberen Lagerschale kann dann die Walzenachse 23 am Schnellverschluss 24 festgelegt werden.

Die Vorrichtung 20 ist im wesentlichen aus einem Rahmenhalter 26 und einem Walzenhalter 27 aufgebaut, die relativ zueinander in einer Stellebene, die sich senkrecht zur Zeichenebene erstreckt, gegeneinander verschoben werden können. Der Rahmenhalter 26 ist aus einer Grundplatte 28, die beispielsweise mittels eines Schwenkarms schwenkbar an dem Gestell einer Druckmaschine befestigt werden kann, und einem Hülsenkörper 29 aufgebaut. Auf der zur Walze 21 weisenden Seite weist der Hülsenkörper 29 eine Ausnehmung 31 auf, in die ein zylinderförmiger Abschnitt 32 des Walzenhalters 27 eingreift. Der Innendurchmesser der Ausnehmung 31 beziehungsweise der Außendurchmesser des Abschnitts 32 ist dabei so gewählt, dass sich ein in der Grundstellung kreiszylindrischer Spalt 33 mit einer Spaltbreite von ca. 1 mm bis 10 mm, insbesondere von 2 mm, bildet. Durch den Spalt 33 wird der maximale Stellbereich zur Verstellung des Walzenhalters 27 relativ zum Rahmenhalter 26 definiert.

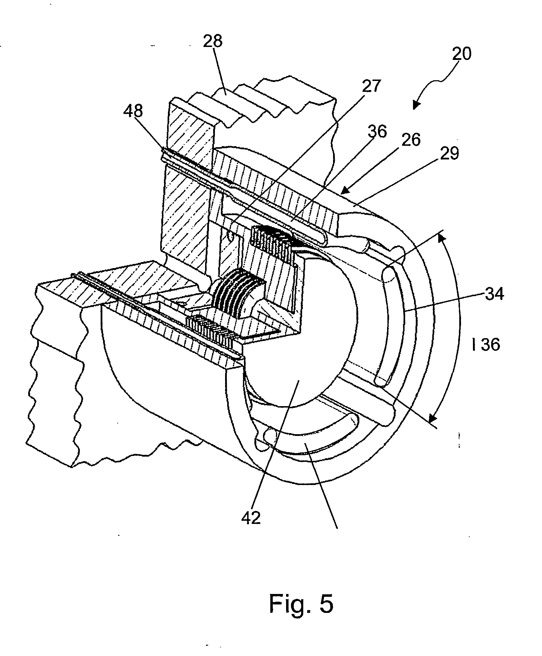

Um die bei der Einstellung der Walze 21 erforderlichen Stellbewegungen realisieren zu können beziehungsweise den gewünschten Anpressdruck zwischen der Walze 21 und der Walze 22 aufbringen zu können, sind im Spalt 33 über den Umfang verteilt insgesamt vier in der Art von Druckschläuchen ausgebildete Aktoren 34, von denen in Fig. 2 lediglich zwei im Schnitt dargestellt sind, angeordnet. Über in Fig. 2 nicht dargestellte Zuleitungen 48 (siehe Fig. 5) können die von der Wandung der Aktoren 34 gebildete Druckkammern 36 mit Druck beaufschlagt werden. Abhängig von den jeweiligen Druckverhältnissen in den vier Aktoren 34 wirkt auf den Walzenhalter 27 eine resultierende Kraft, sodass durch entsprechende Ansteuerung des Drucks in den Aktoren 34 die Walze 21 mit dem gewünschten Anpressdruck gegen die Walze 22 gedrückt werden kann. Da das in den Aktoren 34 unter Druck stehende Luftpolster kompressibel ist, können mechanische Störungen durch die daraus resultierende Federwirkung abgefangen werden.

Bei der Vorrichtung 20 ist eine Höhe h36 der Druckkammer 36 in radialer Richtung der Walze 21 kleiner als eine Breite b36 der Druckkammer 36 in axialer Richtung der Walze 21 und/oder eine Länge I36 der Druckkammer 36 in Umfangrichtung der Walze 21 (siehe auch Fig. 5).

Das Verhältnis von Breite b36 und/oder Länge 136 der Druckkammer 36 zur Höhe h36 der Druckkammer 36; ist größer als 3, insbesondere größer als 5.

Zur Fixierung des Walzenhalters 27 relativ zum Rahmenhalter 26 sind am Walzenhalter 27 Lamellenelemente 37 befestigt die mit am Hülsenkörper 29 befestigten Lamellenelementen 38 unter Bildung eines Lamellenpakets kämmend angeordnet sind. Zur reibschlüssigen Beklemmung des aus den Lamellenelementen 37 und 38 gebildeten Lamellenpakets ist ein im Querschnitt T-förmiger Stempel 39 vorgesehen, dessen kreisförmiger Stempelkopf 40 mit einem kreisringförmigen Flansch 41 am äußersten Lamellenelement 38 des Lamellenpakets zur Anlage kommt. Am gegenüberliegenden Ende des Stempels 39 ist eine Druckplatte 42 befestigt, auf die die Federkraft eines in der Art eines Tellerfederpakets ausgebildeten Federelements 43 wirkt. Das Federelement 43 wird vorgespannt zwischen die Druckplatte 42 und den Hülsenkörper 29 montiert, sodass das von den Lamellenelementen 37; 38 gebildete Lamellenpaket durch die Federkraft, die vom Stempel 39 auf die Lamellenelemente 37; 38 übertragen wird, beklemmt wird.

Zur Verstellung des Walzenhalters 27 relativ zum Rahmenhalter 26, insbesondere beim Einstellen des Anpressdruckes zwischen den Walzen 21; 22 muss die von den Lamellenelementen 37; 38 beziehungsweise dem Stempel 39 und der Druckplatte 42 gebildete Fixiereinrichtung gelöst werden. Dazu ist in der Grundplatte 28 ein Druckanschluss 44 vorgesehen, durch den eine Druckkammer 46 zwischen der Druckplatte 42 und der Grundplatte 28 mit einem Druckmedium, beispielsweise Druckluft beaufschlagt werden kann. Sobald der auf die Druckplatte 42 wirkende Luftdruck die Federkraft des Federelements 43 übersteigt, wird der Stempel 39 soweit vom äußersten Lamellenelement 38 abgehoben, dass diese nicht mehr reibschlüssig beklemmt sind und relativ gegeneinander verschoben werden können.

Die Einstellung des Anpressdrucks zwischen den Walzen 21; 22 erfolgt beispielsweise in folgender Weise. Zunächst wird die Druckkammer 46 mit einem ausreichenden Druck beaufschlagt, sodass die Lamellenelemente 37; 38 nicht mehr reibschlüssig beklemmt werden. Anschließend werden die Aktoren 34 jeweils mit gerade soviel Druck beaufschlagt, dass sich der gewünschte Anpressdruck zwischen den Walzen 21; 22 beziehungsweise zwischen der Walze 21 und weiteren, in Fig. 2 nicht dargestellten Walzen ausbildet und zu einem Kontaktstreifen der gewünschten Breite führt. Sobald die richtige Einstellung mit dem gewünschten Anpressdruck zwischen den Walzen 21; 22 gefunden ist, wird die Druckkammer 46 druckentleert, wodurch der Stempel 39 die Lamellenelemente 37; 38 miteinander beklemmt, sodass der Walzenhalter 27 relativ zum Rahmenhalter 26 in der gewünschten Stellung fixiert ist. Zuletzt werden die Aktoren 34 druckentleert.

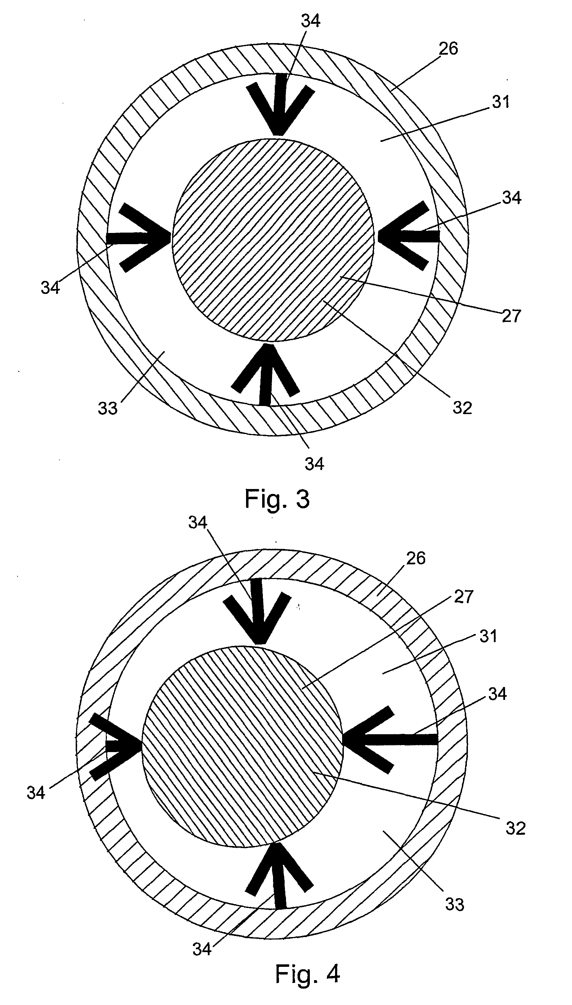

In Fig. 3 und 4 ist das Wirkprinzip der Vorrichtung 20 bei der erforderlichen Stellbewegung in schematischer Weise dargestellt. Fig. 3 zeigt den Rahmenhalter 26 mit der Ausnehmung 31 und den darin eingreifenden Abschnitt 32 des Walzenhalters 27. Durch die Wahl der Abmessungen wird zwischen dem Rahmenhalter 26 und dem Abschnitt 32 des Walzenhalters 27 ein Spalt 33 gebildet, in dem die in Fig. 3 und 4 lediglich schematisch durch Kraftpfeile angedeuteten Aktoren 34 angeordnet sind. Die möglichen Stellbewegungen zwischen dem Rahmenhalter 26 und dem Walzenhalter 27 werden durch eine Stellebene, die sich in der Darstellung von Fig. 3 und Fig. 4 in der Zeichenebene erstreckt, definiert, wobei der Stellbereich der Stellbewegungen durch die Breite des Spalts 33 begrenzt ist.

Wie in Fig. 4 beispielhaft dargestellt, kann der Walzenhalter 27 und damit im Ergebnis die daran befestigte Walze 21 relativ zum Rahmenhalter 26 seitlich versetzt werden, was durch eine entsprechende Ansteuerung der Aktoren 34 und der daraus folgenden Kraftwirkung auf den Abschnitt 32 bewirkt wird. Sobald die gewünschte Stellung des Walzenhalters 27 relativ zum Rahmenhalter 26 gefunden ist, kann die von den Lamellenelementen 37; 38 beziehungsweise dem Stempel 39 und der Druckplatte 42 gebildete Fixiereinrichtung betätigt werden, sodass die Stellung dauerhaft fixiert ist und die Aktoren 34 nicht weiter angetrieben werden müssen.

Fig. 5 zeigt die Vorrichtung 20 mit der Grundplatte 28, dem Rahmenhalter 26, dem Walzenhalter 27 und den Aktoren 34 in perspektivischer Ansicht von vorne. Zwischen dem Hülsenkörper 29 des Rahmenhalters 26 und dem Walzenhalter 27, auf dessen nach vorne gerichteten Seite der halbschalenförmige Schnellverschluss 24 teilweise erkennbar ist, sind die vier in der Art von Druckschläuchen ausgebildeten Aktoren 34 angeordnet, die über Zuleitungen 48 mit Druckluft beaufschlagt werden können. Mittels der Druckplatte 42 können die nicht erkennbaren Lamellenelemente 37; 38 entspannt werden. Man erkennt die außerordentlich kompakte Bauweise der Vorrichtung 20, die aufgrund ihrer insgesamt rotationssymmetrischen Ausbildung (abgesehen von der Grundplatte 28) einen kleineren Durchmesser aufweist, als die Walze 21 selbst (siehe Fig. 2).

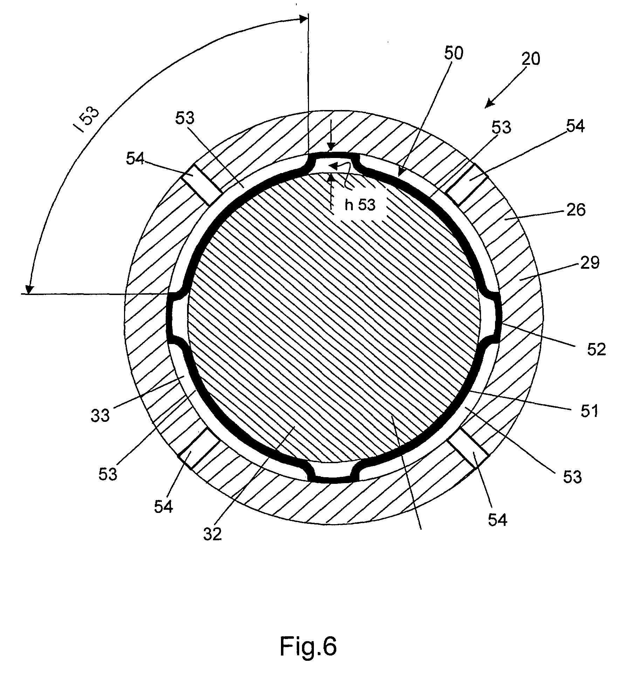

Fig. 6 zeigt eine zweite Ausführungsform 50 eines Aktors 50 für eine Vorrichtung 20 im Querschnitt. Der grundsätzliche Aufbau der Vorrichtung 20 mit Rahmenhalter 26, Walzenhalter 27 und einer Fixiereinrichtung zur Fixierung des Walzenhalters 27 relativ zum Walzenhalter 26 entspricht dem mit Fig. 2 beschriebenen Aufbau und muss deshalb nicht weiter erläutert werden. Zur Bildung des Aktors 50 wird im Spalt 33 eine zylinderförmige Membran 51, deren oberer und unterer Rand mit dem Innendurchmesser des Hülsenkörpers 29 verbunden ist (in Fig. 6 nicht dargestellt), angeordnet. Die Membran 51 wird in zudem in vier streifenförmigen Bereichen 52 mit dem Innendurchmesser des Hülsenkörpers 29 verbunden, beispielsweise festgeklebt, sodass im Ergebnis durch den Hülsenkörper 29 und die Membran 51 vier Druckkammern 53 gebildet werden, die gleichmäßig über den Umfang des Spalts 33 verteilt sind. Die Druckkammern 53 können jeweils über Druckeinlassöffnungen 54 mit Druckluft beaufschlagt werden, sodass abhängig vom jeweiligen Druck in den vier Druckkammern 53 eine resultierende Kraft auf den Abschnitt 32 des Walzenhalters 27 wirkt.

Auch hier ist eine Höhe h53 der Druckkammer 53 der Vorrichtung (20) in radialer Richtung der Walze 21 kleiner als eine Breite der Druckkammer 53 in axialer Richtung der Walze 21 und/oder eine Länge 153 der Druckkammer 53 in Umfangrichtung der Walze 21.

Das Verhältnis von Breite b53 und/oder Länge 153 der Druckkammer 53 zur Höhe h53 der Druckkammer 53; ist größer als 3, insbesondere größer als 5.

### Bezugszeichenliste

- 01: Fixiereinrichtung
- 02: Grundkörper, Teil
- 03: Deckel
- 04: Hülse
- 05: -
- 06: Bolzen, Teil
- 07: Befestigungsplatte
- 08: Bewegungspfeil, Stelleinrichtung
- 09: Lamellenelement (02)
- 10: -
- 11: Lamellenelement (06)
- 12: Klemmeinrichtung
- 13: Anschlussöffnung
- 14: Druckkammer (12)
- 15: Druckstempel (12)
- 16: Druckzylinder (12)
- 17: Endanschlag
- 18: -
- 19: -
- 20: Vorrichtung
- 21: Walze, erste
- 22: Walze, zweite
- 23: Achse, Walzenachse
- 24: Schnellverschluss
- 25: -
- 26: Rahmenhalter
- 27: Walzenhalter
- 28: Grundplatte (26)
- 29: Hülsenkörper (26)
- 30: -
- 31: Ausnehmung (26)
- 32: Abschnitt (27)
- 33: Spalt
- 34: Aktor, Druckschlauch
- 35: -
- 36: Druckkammer
- 37: Lamellenelement (27)
- 38: Lamellenelement (26)
- 39: Stempel
- 40: Stempelkopf
- 41: Flansch (40)
- 42: Druckplatte
- 43: Federelement
- 44: Druckanschluss
- 45: -
- 46: Druckkammer
- 47: Befestigungsschraube
- 48: Zuleitung
- 49: -
- 50: Aktor
- 51: Membran
- 52: Befestigungsabschnitt, Bereich
- 53: Druckkammer
- 54: Druckeinlassöffnung
- b36: Breite (36)
- h36: Höhe (36)
- l36: Länge (36)
- h5: Höhe (53)
- l53: Länge (53)

## Patentansprüche

1. Fixiereinrichtung zur Fixierung einer Vorrichtung mit zwei zumindest in einer Stellrichtung gegeneinander verschiebbaren Bauteilen, wobei zumindest ein Teil (02) der Fixiereinrichtung mit dem ersten Bauteil und zumindest ein anderer Teil (06) mit dem zweiten Bauteil verbunden ist und wobei die Teile der Fixiereinrichtung (02; 06) durch Reibschluss fixierend miteinander in Eingriff bringbar sind, wobei die Fixiereinrichtung (01) zumindest drei hintereinander angeordnete Lamellenelemente (09; 11) aufweist, die abwechselnd jeweils mit dem einen Teil (02) oder dem anderen Teil (06) der Fixiereinrichtung (01) verbunden sind, wobei jedes Lamellenelement (09; 11) mit jeweils zumindest einer Reibfläche, an den Reibflächen der benachbarten Lamellenelemente (09; 11) zur Anlage kommen kann und wobei die Lamellenelemente (09; 11) zur Fixierung mit einer Klemmeinrichtung (12) gegeneinander beklemmt werden können, **dadurch gekennzeichnet, dass** die Lamellenelemente (9; 11) relativ zueinander translatorisch in dieser durch die Reibflächen festgelegten Ebene bewegbar sind.

2. Fixiereinrichtung nach Anspruch 1, **dadurch gekennzeichnet, dass** die Teile (02; 06) der Fixiereinrichtung (01) in verschiedene Stellrichtungen in einer Stellebene gegeneinander verschoben werden können.

3. Fixiereinrichtung nach Anspruch 1 oder 2, **dadurch gekennzeichnet, dass** die Klemmeinrichtung (12) in der Art zumindest eines vorgespannten Federelements (43) ausgebildet ist, dessen Federkraft mittelbar oder unmittelbar auf eines der äußeren Lamellenelemente (37; 38) wirkt, so dass die Lamellenelemente (37; 38) zur Fixierung zwischen einem Anschlag (40) und dem vorgespannten Federelement (43) beklemmt werden können, wobei das Federelement (43) durch Betätigung eines Stellelements (39; 40; 42), soweit zusammengedrückt werden kann, dass die Lamellenelemente (37; 38) gegeneinander verschoben werden können.

4. Fixiereinrichtung nach Anspruch 3, **dadurch gekennzeichnet, dass** das Federelement (43) in der Art eines Tellerfederpakets ausgebildet ist.

5. Fixiereinrichtung nach Anspruch 3 oder 4, **dadurch gekennzeichnet, dass** das Stellelement einen Stempel (39; 40) aufweist, der mit einer Druckplatte (42) verschiebbar in einer Druckkammer (46) angeordnet ist und der durch Beaufschlagung der Druckkammer (46) mit einem Druckmedium gegen die Federkraft des Federelements (43) verschoben werden kann.

6. Fixiereinrichtung nach einem der Ansprüche 1 bis 5, **dadurch gekennzeichnet, dass** in der Fixiereinrichtung (01) eine Mehrzahl von Lamellenelementen (09; 11) zu einem Lamellenpaket kombiniert sind.

7. Fixiereinrichtung nach einem der Ansprüche 1 bis 6, **dadurch gekennzeichnet, dass** die Fixiereinrichtung (01) im wesentlichen kreissymmetrisch ausgebildet ist, wobei die Lamellenelemente (09; 11) achsensymmetrisch zur Mittelachse der Fixiereinrichtung (01) angeordnet sind.

8. Fixiereinrichtung nach Anspruch 1, **dadurch gekennzeichnet, dass** die Lamellenelemente (9; 11) eine Rotationsachse (23) einer Walze (21) festlegend angeordnet sind und dass die Lamellenelemente (9; 11) zumindest teilweise relativ zueinander in radialer Richtung zur Rotationsachse (23) verschiebbar sind.

9. Fixiereinrichtung nach Anspruch 1, **dadurch gekennzeichnet, dass** die Fixiereinrichtung in einer Druckmaschine angeordnet ist.

## Claims

1. Fixing device for fixing an apparatus having two components which can be displaced with respect to each other at least in one actuating direction, at least one part (02) of the fixing device being connected to the first component and at least another part (06) being connected to the second component, and it being possible for the parts of the fixing device (02; 06) to be brought into engagement with one another in a fixing manner by means of a frictional connection, the fixing device (01) having at least three lamellar elements (09; 11) which are arranged one after another and which are alternately connected in each case to one part (02) or to the other part (06) of the fixing device (01), it being possible for each of the lamellar elements (09; 11) to come into contact with in each case at least one frictional surface on the frictional surfaces of the adjacent lamellar elements (09; 11), and it being possible for the lamellar elements (09; 11) to be clamped against each other via a clamping device (12) in order to be fixed, **characterized in that** the lamellar elements (09; 11) can be moved relative to one another in a translational manner in the plane defined by the frictional surfaces.

2. Fixing device according to Claim 1, **characterized in that** the parts (02; 06) of the fixing device (01) can be displaced with respect to one another in various actuating directions in an actuating plane.

3. Fixing device according to Claim 1 or 2, **characterized in that** the clamping device (12) is formed in the manner of at least one prestressed spring element (43) whose spring force acts indirectly or directly on one of the outer lamellar elements (37; 38), so that the lamellar elements (37; 38) can be clamped between a stop (40) and the prestressed spring element (43) in order to fix them, it being possible for the spring element (43) to be compressed as a result of actuation of an actuating element (39; 40; 42) to such an extent that the lamellar elements (37; 38) can be displaced with respect to one another.

4. Fixing device according to Claim 3, **characterized in that** the spring element (43) is formed in the manner of a disc spring pack.

5. Fixing device according to Claim 3 or 4, **characterized in that** the actuating element has a plunger (39; 14) which, with the pressure plate (42), is arranged such that it can be displaced in a pressure chamber (46) and which, as a result of the pressure chamber (46) being acted on by a pressure medium, can be displaced counter to the spring force of the spring element (43).

6. Fixing device according to one of Claims 1 to 5, **characterized in that**, in the fixing device (01), a plurality of lamellar elements (09; 11) are combined to form a pack of the laminations.

7. Fixing device according to one of Claims 1 to 6, **characterized in that** the fixing device (01) is substantially circularly symmetrical, the lamellar elements (09; 11) being arranged axially symmetrically with respect to the mid-axis of the fixing device (01).

8. Fixing device according to Claim 1, **characterized in that** the lamellar elements (9; 11) are arranged so as to define an axis of rotation (23) of a roll (21), and **in that** the lamellar elements (9; 11) can at least partly be displaced relative to one another in the radial direction with respect to the axis of rotation (23).

9. Fixing device according to Claim 1, **characterized in that** the fixing device is arranged in a printing press.

## Revendications

1. Dispositif de fixation pour assurer la fixation d'un équipement comprenant deux composants déplaçables l'un par rapport à l'autre au moins dans leur direction de réglage, au moins une partie (02) du dispositif de fixation étant reliée au premier composant et au moins une autre partie (06) étant reliée au deuxième composant et les parties du dispositif de fixation (02 ; 06) étant susceptibles d'être mises en prise entre elles avec effet de fixation par une liaison par friction, sachant que le dispositif de fixation (01) présente au moins trois éléments à lamelles (09 ; 11) disposés l'un derrière l'autre, reliés en alternance chacun à une première partie (02) ou à l'autre partie (06) du dispositif de fixation (01), sachant que chaque élément à lamelles (02 ; 11 ) peut venir en appui avec, chaque fois, au moins une face de friction, sur les faces de friction des éléments à lamelles (09 ; 11 ) voisins, et les éléments à lamelles (09 ; 11 ) peuvent être serrés l'un contre l'autre dans le but d'une fixation, à l'aide d'un dispositif de serrage (12), **caractérisé en ce que** les éléments à lamelles (9 ; 11) sont déplaçables les uns par rapport aux autres en translation dans ce plan, fixé par les faces de friction.

2. Dispositif de fixation selon la revendication 1, **caractérisé en ce que** les parties (02 ; 06) du dispositif de fixation (01) peuvent être déplacées l'une par rapport à l'autre dans un plan de réglage, en différentes directions de réglage.

3. Dispositif de fixation selon la revendication 1 ou 2, **caractérisé en ce que** le dispositif de serrage (12) est réalisé à la manière au moins d'un élément à ressort (43) précontraint, dont la force élastique agit indirectement ou directement sur l'un des éléments à lamelles (37 ; 38) extérieur, de manière que les éléments à lamelles (37 ; 38) puissent, pour assurer la fixation, être serrés entre une butée (40) et l'élément à ressort (43) précontraint, sachant que l'élément à ressort (43) peut être comprimé par actionnement d'un élément de réglage (39 ; 40 ; 42), à un degré faisant que les éléments à lamelles (37 ; 38) puissent être déplacés l'un par rapport à l'autre.

4. Dispositif de fixation selon la revendication 3, **caractérisé en ce que** l'élément à ressort (43) est réalisé à la façon d'un paquet de ressorts disque.

5. Dispositif de fixation selon la revendication 3 ou 4, **caractérisé en ce que** l'élément de réglage présente un poinçon (39 ; 40), disposé dans une chambre de pressage (46) de façon déplaçable à l'aide d'une plaque de pressage (42) et qui, par une sollicitation de la chambre à pression (46) par un fluide sous pression, peut être déplacé à l'encontre de la force élastique exercée par l'élément à ressort (43).

6. Dispositif de fixation selon l'une des revendications 1 à 5, **caractérisé en ce qu'**une pluralité d'éléments à lamelles (9 ; 11) sont combinés en un paquet de lamelles dans le dispositif de fixation (01).

7. Dispositif de fixation selon l'une des revendications 1 à 6, **caractérisé en ce que** le dispositif de fixation (01) est réalisé en répondant sensiblement à une symétrie circulaire, sachant que les éléments à lamelles (09 ; 11 ) sont disposés de façon axialement symétrique par rapport à l'axe central du dispositif de fixation (01).

8. Dispositif de fixation selon la revendication 1, **caractérisé en ce que** les éléments à lamelles (9 ; 11) sont disposés avec un effet de fixation d'un axe de rotation (23) d'un rouleau (21), et **en ce que** les éléments à lamelles (9 ; 11) sont déplaçables au moins partiellement les uns par rapport aux autres en direction radiale, par rapport à l'axe de rotation (23).

9. Dispositif de fixation selon la revendication 1, **caractérisé en ce que** le dispositif de fixation est disposé dans une machine à imprimer.
